# EUROPEAN PATENT APPLICATION

(11) **EP 4 675 759 A1**
(43) Date of publication of application: **07.01.2026**
(21) Application number: 24209589.1
(22) Date of filing: 29.10.2024
(51) Int. Cl.: H01M 10/613, H01M 50/103, H01M 50/209, H01M 50/342, H01M 50/474, H01M 50/477

(54) **BATTERY CELL AND BATTERY PACK**

(30) Priority: 01.07.2024 CN 202421540580 U; 22.07.2024 WO PCT/CN2024/106655
(71) Applicant: Eve Energy Co., Ltd., Huizhou, Guangdong 516006 (CN)
(72) Inventor: WU, Xiaojuan, Huizhou, Guangdong 516006 (CN); FENG, Yanqiang, Huizhou, Guangdong 516006 (CN); OU, Caixia, Huizhou, Guangdong 516006 (CN)
(74) Representative: Cabinet Beaumont

(57) **Abstract**

The present application relates to the technical field of batteries, and in particular to, a battery cell and a battery pack. A battery cell and a battery pack are provided. The battery cell includes a core (100), a housing (200), an explosion-proof valve (210) and a first bracket (300). The core (100) is disposed in the housing (200), and the explosion-proof valve (210) is disposed at a bottom of the housing (200). The first bracket (300) is disposed in the housing (200), and the core (100) is disposed on the first bracket (300). The first bracket (300) is provided with a first through hole (330), the first bracket (300) and the bottom of the housing (200) are enclosed to form an accommodation space (350), the explosion-proof valve (210) is located in the accommodation space (350), and the first through hole (330) communicates with the accommodation space (350) so that gas generated by the core (100) may flow into the accommodation space (350) via the first through hole (330). The battery cell has the improved stability and reliability, enables the explosion-proof valve to be normally activated, and reduces the safety hazard.

## Description

### TECHNICAL FIELD

The present application relates to the technical field of batteries, for example, a battery cell and a battery pack.

### BACKGROUND

In the related art, an explosion-proof valve of some battery cells is disposed at the bottom of a housing so that the safety performance of a battery module can be improved.

However, a core within the battery cell in the related art is usually directly connected to the bottom of the housing, in this manner, the explosion-proof valve is easily extruded or touched in the process of assembling and using the core, which results in a failure of the core. Moreover, the core is in direct contact with the explosion-proof valve, when the core is subjected to thermal runaway, a phenomenon that the explosion-proof valve cannot be normally activated may occur, thereby increasing the safety hazard.

### SUMMARY

The present application provides a battery cell to improve the stability and reliability of the battery cell, and to enable an explosion-proof valve to be normally activated and reduce the safety hazard.

The present application provides a battery cell. The battery cell includes a core, a housing and a first bracket. The core is disposed in the housing, and an explosion-proof valve is disposed at a bottom of the housing. The first bracket is disposed in the housing, the core is disposed on the first bracket, the first bracket and the bottom of the housing are enclosed to form an accommodation space, the explosion-proof valve is located in the accommodation space, the first bracket is provided with a first through hole, and the first through hole communicates with the accommodation space.

In a technical solution of the battery cell, the first bracket includes a first support portion and a second support portion. The first support portion is connected to the second support portion, the first through hole is arranged on the first support portion, the core is disposed on the first support portion, and a side of the second support portion away from the first support portion is connected to the bottom of the housing.

In a technical solution of the battery cell, multiple first through holes are provided and disposed at intervals.

In a technical solution of the battery cell, in a height direction of the core, a proj ection of the core overlaps with a projection of the first through hole.

In a technical solution of the battery cell, the second support portion is provided with a second through hole, a side wall of the housing and the first bracket are enclosed to form a gap, and the second through hole is configured to communicate the accommodation space with the gap.

In a technical solution of the battery cell, the second support portion is provided with a second through hole, the second support portion has an inner surface and an outer surface, a side wall of the housing is in contact with the outer surface of the second support portion, the inner surface of the second support portion is located in the accommodation space, and the second through hole penetrates through the inner surface and the outer surface of the second support portion.

In a technical solution of the battery cell, multiple second through holes are provided and disposed at intervals.

In a technical solution of the battery cell, the battery cell further includes a second bracket and a cover plate assembly, the second bracket is disposed on a top of the core and is located in the housing, the cover plate assembly is disposed on the second bracket, an opening is formed on a side of the housing facing the top of the core, and the cover plate assembly covers the opening of the housing.

In a technical solution of the battery cell, the cover plate assembly includes a positive terminal and a negative terminal, the positive terminal and the negative terminal are both connected to the core, the second bracket is provided with a protrusion portion protruding in a direction towards the core, and the protrusion portion is located between the positive terminal and the negative terminal.

In a technical solution of the battery cell, the protrusion portion has a height not less than 0.2 mm.

The present application provides a battery pack, which has high reliability and stability, so that the safety performance can be improved, and thus the safety hazard is reduced.

The present application provides a battery pack. The battery pack includes a battery module and a liquid cooling plate, the liquid cooling plate is connected to a side surface of the battery module, and the battery module includes multiple battery cells.

In a technical solution of the battery pack, the housing has a first face and a second face, the first face and the second face are contiguous to each other, an area of the first face is greater than an area of the second face, second faces of two adjacent housings are connected to each other, and the liquid cooling plate is connected to the first face of the housing.

The beneficial effects of the present application at least include as follows. The present application provides a battery cell, and the battery cell includes a core, a housing, an explosion-proof valve and a first bracket. The core is disposed in the housing, and the explosion-proof valve is disposed at the bottom of the housing. The first bracket is disposed in the housing, and the core is disposed on the first bracket. The first bracket is provided with a first through hole, the first bracket and the bottom of the housing are enclosed to form an accommodation space, the explosion-proof valve is located in the accommodation space, and the first through hole communicates with the accommodation space so that gas generated by the core may flow into the accommodation space via the first through hole. The first bracket is provided so that the core is not in direct contact with the explosion-proof valve at the bottom of the housing, thereby avoiding a phenomenon of extrusion, touching and the like between the core and the explosion-proof valve in a process of assembling the battery cell, ensuring that the explosion-proof valve can work normally, and improving the stability and reliability of the battery cell. Moreover, the first bracket and the bottom of the housing are enclosed to form the accommodation space so that high-temperature and high-pressure gas generated when thermal runaway of the core occurs can be accumulated within the accommodation space, and when the gas reaches a certain pressure, the explosion-proof valve is triggered to open for pressure relief. The structural design of the battery core in the present application can improve the safety performance of the battery cell and save the cost.

The present application provides a battery pack. The battery pack has high reliability and stability so that the safety performance can be improved, and thus the safety hazard is reduced.

### BRIEF DESCRIPTION OF DRAWINGS

FIG. 1 is a schematic structural diagram of a battery cell according to an embodiment of the present application; and
FIG. 2 is a schematic structural diagram of a battery module according to an embodiment of the present application.

### Reference list:

- 10: battery cell
- 20: battery module
- 21: liquid cooling plate
- 100: core
- 200: housing
- 210: explosion-proof valve
- 300: first bracket
- 310: first support portion
- 320: second support portion
- 330: first through hole
- 340: second through hole
- 350: accommodation space
- 400: second bracket
- 410: protrusion portion
- 500: cover plate assembly
- 510: positive terminal
- 520: negative terminal
- 530: positive current collector
- 540: negative current collector

### DETAILED DESCRIPTION

In order to make purposes, technical solutions and advantages of embodiments of the present application clearer, the technical solutions in the embodiments of the present application will be described clearly and completely below in conjunction with the accompanying drawings in the embodiments of the present disclosure, the described embodiments are merely part of the embodiments of the present application, rather than all of the embodiments of the present application. Assemblies of the embodiments of the present application generally described and shown in the accompanying drawings herein may be arranged and designed in a variety of different configurations.

Therefore, the following detailed description of the embodiments of the present application provided in the accompanying drawings is not intended to limit the scope of the claimed present application, but rather to represent selected embodiments of the present application.

Like reference numerals and letters denote similar items in the following accompanying drawings, and thus, once an item is defined in one accompanying drawing, the item is not required to be defined and explained in the subsequent accompanying drawings.

In the description of the present application, it is to be noted that orientations or position relations indicated by terms such as "upper", "lower", "left", "right", "vertical", "horizontal", "inner" and "outer" are based on orientations or position relations shown in the accompanying drawings, or orientations or position relations of products of the present application which are usually placed when in use. These orientations or position relations are intended only to facilitate and simplify the description of the present application and not to indicate or imply that an apparatus or element referred to must have such particular orientations or must be configured or operated in such particular orientations. Thus, these orientations or position relations are not to be construed as limiting the present application. Moreover, terms such as "first", "second" and "third" are used only for distinguishing descriptions and are not to be construed as indicating or implying relative importance. In the description of the present application, "multiple" means two or more unless otherwise specified.

In the description of the present application, terms such as "disposed" and "connected" are to be construed in a broad sense unless otherwise expressly specified and limited. For example, the term "connected" may refer to "fixedly connected" or "detachably connected" or "integrally connected"; or may refer to "mechanically connected" or "electrically connected". For those of ordinary skill in the art, meanings of the preceding terms in the present application may be understood based on situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature between the first feature and the second feature. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

The embodiments of the present application will be described in detail below, examples of the embodiments are shown in the accompanying drawings, where the same or similar reference numerals are used to indicate the same or similar elements, or elements having the same or similar functions. The embodiments described below with reference to the accompanying drawings are illustrative and are intended only to explain the present application and are not to be construed as limitations to the present application.

This embodiment provides a battery cell. The battery cell has high stability and reliability, the occurrence of the failure of an explosion-proof valve can be reduced in a process of assembling the battery cell, and the explosion-proof valve can be normally activated when thermal runaway occurs, thereby reducing a safety hazard.

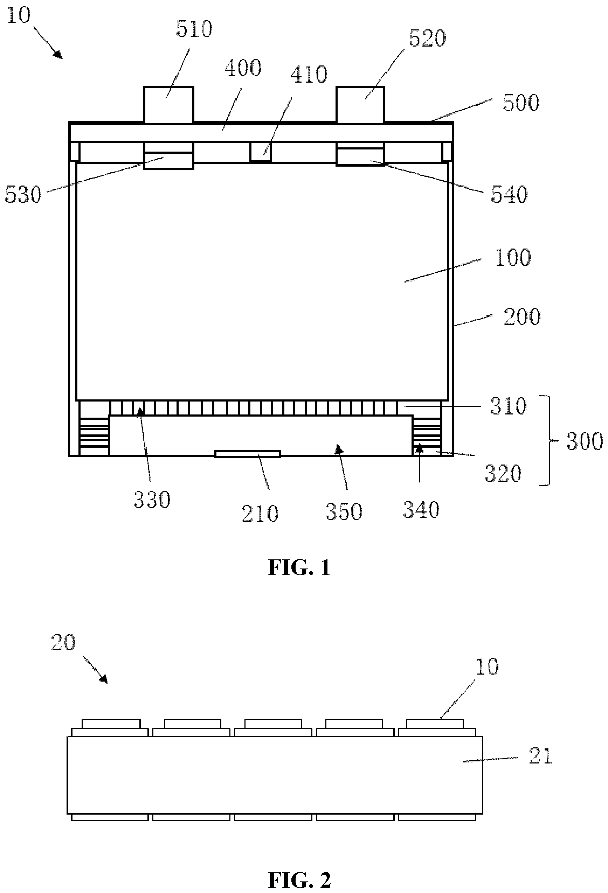

As shown in FIG. 1, the battery cell 10 mainly includes a core 100, a housing 200, an explosion-proof valve 210 and a first bracket 300. The core 100 is disposed in the housing 200, and the explosion-proof valve 210 is disposed at a bottom of the housing 200. The first bracket 300 is disposed in the housing 200, and the core 100 is disposed on the first bracket 300. The first bracket 300 is provided with a first through hole 330, the first bracket 300 and the bottom of the housing 200 are enclosed to form an accommodation space 350, the explosion-proof valve 210 is located in the accommodation space 350, and the first through hole 330 communicates with the accommodation space 350 so that gas generated by the core 100 may flow into the accommodation space 350 via the first through hole 330.

Based on the above design, in this embodiment, the core 100 may be designed as a rectangular shape and the like. The explosion-proof valve 210 is disposed at the bottom of the housing 200, in this way, when thermal runaway of the core 100 occurs, high-temperature and high-pressure gas generated by the core 100 may be discharged from the bottom of the battery cell 10 via the explosion-proof valve 210, and thus, the high-temperature and high-pressure gas does not damage electronic elements such as a terminal and a tab on the top of the battery cell 10, thereby achieving the purpose of electrical-gas separation and improving the safety performance of the battery cell 10.

The first bracket 300 in this embodiment is located at the bottom of the housing 200, and the core 100 is disposed on the first bracket 300. The first bracket 300 is provided, on one hand, the first bracket 300 provides the support for the core 100 to a certain degree; on the other hand, the first bracket 300 and the bottom of the housing 200 are enclosed to form the accommodation space 350, and the first through hole 330 is disposed on the first bracket 300, in this way, when thermal runaway of the core 100 occurs, the high-temperature and high-pressure gas generated by the core 100 may flow into the accommodation space 350 via the first through hole 330, and when the gas in the accommodation space 350 reaches a certain pressure, the explosion-proof valve 210 is opened for pressure relief, thereby avoiding the risk of thermal runaway propagation or even explosion of the battery cell 10 and improving the safety performance.

The first bracket 300 is provided so that the core 100 is not in direct contact with the explosion-proof valve 210 at the bottom of the housing 200, thereby avoiding the phenomenon of extrusion, touching and the like between the core 100 and the explosion-proof valve 210 in the process of assembling the battery cell 10, ensuring that the explosion-proof valve 210 can work normally, and improving the stability and reliability of the battery cell 10. Moreover, the first bracket 300 and the bottom of the housing 200 are enclosed to form the accommodation space 350 so that the high-temperature and high-pressure gas generated when the thermal runaway of the core 100 occurs can be accumulated within the accommodation space 350, and when the gas reaches a certain pressure, the explosion-proof valve 210 is triggered to open for pressure relief. The core 100 is not in direct contact with the explosion-proof valve 210 so that the explosion-proof valve 210 can be prevented from failing to be activated in time due to inaccurate sensing of the pressure value. The structural design of the battery cell 10 in this embodiment can improve the safety performance of the battery cell 10 and save the cost.

The first bracket 300 in this embodiment may be made of a polypropylene (PP) insulating plastic material, reducing the weight of the battery cell 10, easy to assemble, and saving the cost.

As shown in FIG. 1, in this embodiment, the first bracket 300 includes a first support portion 310 and a second support portion 320. The first support portion 310 is connected to the second support portion 320, the first support portion 310 is provided with a first through hole 330, the core 100 is disposed on the first support portion 310, and a side of the second support portion 320 way from the first support portion 310 is connected to the bottom of the housing 200.

The first support portion 310 and the second support portion 320 in this embodiment are integrally formed, thereby improving the stability and strength of the first bracket 300. The first support portion 310 is configured to support the core 100, and the second support portion 320 can maintain a certain distance between the first support portion 310 and the bottom of the housing 200, thereby facilitating the formation of the accommodation space 350.

The height of the second supporting portion 320 in this embodiment may be set to 2 mm, 3 mm, 4 mm, or the like.

As shown in FIG. 1, in this embodiment, multiple first through holes 330 are provided, and the multiple first through holes 330 are disposed at intervals. In some embodiments, the number of first through holes 330 may be set to five, ten, fifteen, or the like, and when thermal runaway of the core 100 occurs, the gas may flow from the first through hole 330 into the accommodation space 350 in time, thereby improving the safety performance of the battery cell 10.

In this embodiment, a projection of the core 100 in a height direction of the core 100 overlaps a projection of the first through hole 330 in the height direction of the core 100. In this way, each first through hole 330 may be covered by the bottom of the core 100, thereby improving the utilization rate of the first through hole 330. When thermal runaway of the core 100 occurs, the gas may be discharged from the first through hole 330 in time, thereby improving the safety performance of the battery cell 10.

As shown in FIG. 1, in this embodiment, the second support portion 320 is provided with a second through hole 340, one end of the second through hole 340 communicates with the accommodation space 350, and the other end of the second through hole 340 is in conductive thermal communication with the housing 200. In this way, the high-temperature and high-pressure gas in the accommodation space 350 may be in conductive thermal communication with the housing 200 via the second through hole 340. Since the outer wall of the housing 200 is usually provided with a liquid cooling plate 21, in this way, the heat of the gas may be transferred to the liquid cooling plate 21 so that the liquid cooling plate 21 performs cooling on the gas, that is, implements the cooling effect on the battery cell 10, a phenomenon of thermal runaway propagation of the battery cell 10 is avoided, and the safety and stability of the battery cell 10 are improved.

In some embodiments, the second support portion 320 is provided with a second through hole 340, the second support portion 320 has an inner surface and an outer surface, a side wall of the housing 200 is in contact with the outer surface of the second support portion 320, the inner surface of the second support portion 320 is located in the accommodation space 350, and the second through hole 340 penetrates through the inner surface and the outer surface of the second support portion 320. That is, the outer surface of the second support portion 320 is in direct contact with the side wall of the housing 200 so that high-temperature gas can quickly achieve the heat exchange with the side wall of the housing 200 through the second through hole 340, thereby improving the heat exchange efficiency.

In some embodiments, the side wall of the housing 200 and the first bracket 300 are enclosed to form a gap, and the second through hole 340 is configured to communicate the accommodation space 350 with the gap. In this way, the high-temperature gas flowing through the second through hole 340 may be accumulated in the gap, and then may exchange heat with the side wall of the housing 200. This structural design facilitates the assembly of the first bracket 300 and the housing 200, avoids the interference between the first bracket 300 and the housing 200, and improves the assembly efficiency.

Multiple second through holes 340 may be provided in this embodiment, and the multiple second through holes 340 are disposed at intervals; in this manner, the efficiency of cooling and heat-exchange of the liquid cooling plate 21 on the high-temperature and high-pressure gas flowing to the housing 200 can be improved, the safety performance of the battery cell 10 can be improved, and the phenomenon of thermal runaway propagation of the battery cell 10 can be reduced or avoided.

As shown in FIG. 1, the battery cell 10 in this embodiment further includes a second bracket 400 and a cover plate assembly 500. The second bracket 400 is disposed at the top of the core 100, and the second bracket 400 is located within the housing 200. The cover plate assembly 500 is disposed on the second bracket 400, and the cover plate assembly 500 covers an opening of the housing 200.

The second bracket 40 is provided so that a certain degree of support is provided for the cover plate assembly 500, and thus the stability and reliability of the battery cell 10 are improved. Moreover, the second bracket 400 cooperates with the first bracket 300 to play a certain role in fixing and protecting the core 100, thereby preventing the core 100 from shaking up and down inside the housing 200, avoiding the contact of the tab with a positive plate and a negative plate of the core 100 as well as the housing 200, and preventing the occurrence of short circuits.

The second bracket 400 In this embodiment may be made of a PP insulating plastic material, which reduces the weight of the battery cell 10, is easy to assemble, and saves the cost.

As shown in FIG. 1, in this embodiment, the cover plate assembly 500 includes a positive terminal 510 and a negative terminal 520, both the positive terminal 510 and the negative terminal 520 are connected to the core 100. The second bracket 400 is provided with a protrusion portion 410 protruding in a direction towards the core 100, and the protrusion portion 410 is located between the positive terminal 510 and the negative terminal 520. The positive terminal 510 is connected to the core 100 through a positive current collector 530, and the negative terminal 520 is connected to the core 100 through a negative current collector 540. The protrusion portion 410 is provided so that the risk of short-circuit lap of the positive current collector 530 and the negative current collector 540 can be prevented, and the safety performance of the battery cell 10 can be improved.

The height of the protrusion portion 410 in this embodiment may be set to 0.2 mm, 0.3 mm, 0.4 mm, or the like.

The core 100 in this embodiment adopts a multi-core package parallel structure, and the number of core packages is not less than two.

A dimension relation of the length L, the height H, and the thickness T of the core 100 in this embodiment may be set as follows: L/T ≥ 0.5, L/H ≤ 1.5, and T/H ≥ 0.6.

As shown in FIG. 2, this embodiment further provides a battery pack. The battery pack includes a battery module 20 and a liquid cooling plate 21, the liquid cooling plate 21 is connected to a side surface of the battery module 20, and the battery module 20 includes more than one battery cell 10.

The housing 200 has a first face and a second face, the first face and the second face are contiguous to each other, the area of the first face is greater than the area of the second face, second faces of housings 200 of two adj acent battery cells 10 are connected to each other, and the liquid cooling plate 21 is connected to the first face of the housing 200.

The first face in this embodiment is a large surface of the housing 200, and the second face is a narrow surface of the housing 200.

The liquid cooling plate 21 in this embodiment is bonded to the side surface (i.e., the first face) of the housing 200 by using a thermal conductive adhesive or a structural adhesive, thereby achieving the purpose of the heat exchange between the liquid cooling plate 21 and the housing 200. The liquid cooling plate 21 is bonded to each of two opposite side surfaces (i.e., the first face) of the housing 200, thereby increasing the heat exchange area and improving the heat exchange efficiency.

The battery pack has the battery module 20, which enables the battery pack to have the high reliability and stability, improves the safety performance of the battery pack, and reduces the safety hazard.

In the description of this specification, reference terms "some embodiments" and "other embodiments" and the like mean that features, structures, materials, or characteristics described in connection with this embodiment or example are included in at least one embodiment or example of the present application. In this specification, illustrative expressions of these terms do not necessarily refer to the same embodiment or example. Moreover, the features, the structures, the materials, or the characteristics described may be combined in a suitable manner in any one or more embodiments or examples.

## Claims

1. A battery cell, comprising:
a core (100);
a housing (200), wherein the core (100) is disposed in the housing (200), and an explosion-proof valve (210) is disposed at a bottom of the housing (200); and
a first bracket (300) disposed in the housing (200), wherein the core (100) is disposed on the first bracket (300), an accommodation space (350) is formed by enclosing the first bracket (300) and the bottom of the housing (200), the explosion-proof valve (210) is located in the accommodation space (350), the first bracket (300) is provided with a first through hole (330), and the first through hole (330) communicates with the accommodation space (350).

2. The battery cell of claim 1, wherein the first bracket (300) comprises a first support portion (310) and a second support portion (320), the first support portion (310) is connected to the second support portion (320), the first through hole (330) is arranged on the first support portion (310), the core (100) is disposed on the first support portion (310), and a side of the second support portion (320) away from the first support portion (310) is connected to the bottom of the housing (200).

3. The battery cell of claim 1 or 2, wherein a plurality of first through holes (330) are provided and arranged at intervals.

4. The battery cell of any one of claims 1 to 3, wherein in a height direction of the core (100), a projection of the core (100) overlaps a projection of the first through hole (330).

5. The battery cell of any one of claims 2 to 4, wherein the second support portion (320) is provided with a second through hole (340), a gap is formed by enclosing a side wall of the housing (200) and the first bracket (300), and the second through hole (340) is configured to communicate the accommodation space (350) with the gap.

6. The battery cell of any one of claims 2 to 4, wherein the second support portion (320) is provided with a second through hole (340), the second support portion (320) has an inner surface and an outer surface, a side wall of the housing (200) is in contact with the outer surface of the second support portion (320), the inner surface of the second support portion (320) is located in the accommodation space (350), and the second through hole (340) penetrates through the inner surface of the second support portion (320) and the outer surface of the second support portion (320).

7. The battery cell of claim 5 or 6, wherein a plurality of second through holes (340) are provided and arranged at intervals.

8. The battery cell of any one of claims 1 to 7, further comprising a second bracket (400) and a cover plate assembly (500), the second bracket (400) is disposed on a top of the core (100) and located in the housing (200), the cover plate assembly (500) is disposed on the second bracket (400), an opening is formed on a side of the housing (200) facing the top of the core (100), and the cover plate assembly (500) is configured to cover the opening of the housing (200).

9. The battery cell of claim 8, wherein the cover plate assembly (500) comprises a positive terminal (510) and a negative terminal (520), the positive terminal (510) and the negative terminal (520) are both connected to the core (100), the second bracket (400) is provided with a protrusion portion (410) protruding in a direction towards the core (100), and the protrusion portion (410) is located between the positive terminal (510) and the negative terminal (520).

10. The battery cell of claim 9, wherein the protrusion portion (410) has a height not less than 0.2 mm.

11. A battery pack, comprising a battery module (20) and a liquid cooling plate (21), wherein the liquid cooling plate (21) is connected to a side surface of the battery module (20), and the battery module (20) comprises a plurality of battery cells (10) according to any one of claims 1 to 10.

12. The battery pack of claim 11, wherein the housing (200) has a first face and a second face, the first face and the second face are contiguous to each other, an area of the first face is greater than an area of the second face, second faces of two adjacent housings (200) are connected to each other, and the liquid cooling plate (21) is connected to the first face of the housing (200).
